# EUROPÄISCHE PATENTSCHRIFT

(11) **EP 1 740 840 B1**
(45) Veröffentlichungstag und Bekanntmachung des Hinweises auf die Patenterteilung: **27.08.2008**
(21) Anmeldenummer: 05749609.3
(22) Anmeldetag: 26.04.2005
(51) Int. Cl.: F16D 1/09

(54) **STECKKUPPLUNG**
PLUG-IN COUPLING
ACCOUPLEMENT EMBOITE

(30) Priorität: 26.04.2004 DE 102004020485
(43) Veröffentlichungstag der Anmeldung: 10.01.2007
(73) Patentinhaber: R+W Antriebselemente GmbH, 63911 Klingenberg (DE)
(72) Erfinder: RIMPEL, Andreas, 63933 Mönchberg (DE); WÖBER, Michael, 63939 Wörth a. Main (DE)
(74) Vertreter: Thürer, Andreas
(86) Internationale Anmeldenummer: PCT/DE2005/000760
(87) Internationale Veröffentlichungsnummer: WO 2005/103518

(56) Entgegenhaltungen:
- EP-A- 0 669 236
- EP-A- 1 179 469
- FR-A- 2 775 946
- PATENT ABSTRACTS OF JAPAN Bd. 2000, Nr. 16, 8. Mai 2001 (2001-05-08) & JP 2001 003946 A (KOYO SEIKO CO LTD), 9. Januar 2001 (2001-01-09)
- PATENT ABSTRACTS OF JAPAN Bd. 2000, Nr. 06, 22. September 2000 (2000-09-22) & JP 2000 087993 A (KOYO SEIKO CO LTD), 28. März 2000 (2000-03-28)

## Beschreibung

Die Erfindung betrifft eine Steckkupplung mit einem positiven Kupplungspartner, der mit einem Einführ-Ende voran in eine Aufnahmeöffnung eines negativen Kupplungspartners einzuführen ist, wobei die Kupplungspartner korrespondierende Wandungs-Drehformschlusselemente aufweisen, so dass im eingeführten Zustand die Wandungs-Drehformschlusselemente der Kupplungspartner in einer drehformschlüssigen, relativen Eingriffs-Drehstellung stehen und eine gegenseitige Drehmomentenkupplung der Kupplungspartner bewirken,

Bekannt sind Steckkupplungen bestehend aus positiven und negativen Steckpartnern, die drehformschlüssig ineinander gesteckt werden können. Sie dienen einer möglichst spielfreie Übertragung einer Drehbewegung sowie der Dämpfung von Kraftstößen. EP 0669236 A1, JP 2001003946, JP 2000087993, EP 1179469 und FR 2775946 zeigen Steckkupphungen dieser Art.

Als nachteilig erweist sich bei dem Einsteckvorgang der beiden Kupplungspartner, dass er regelmäßig nur bei direktem Sichtkontakt einfach und sicher vorgenommen werden kann.

Aufgabe der vorliegenden Erfindung ist es, eine Steckkupplung bereitzustellen, die es ermöglicht, auch ohne visuelle Kontrolle eine wiederholbar zuverlässige Einkupplung zu erreichen.

Die Aufgabe wird gelöst durch eine Steckkupplung nach dem Anspruch 1, wobei praktisch entlang der gesamten Einhüllenden des Außenumfangs des Einführ-Endes des positiven Kupplungspartners und/oder der Einhüllenden des Innenumfangs der Aufnahmeöffnung des negativen Kupplungspartners verteilte, im wesentlichen konkave Einführaussparungen vorgesehen sind, welche mit den Wandungs-Drehformschlusselementen beider Kupplungspartner und/oder mit den Einführaussparungen des jeweils anderen Kupplungspartners hinsichtlich ihrer Anzahl, Anordnung und Geometrie derart korrespondieren, dass sie eine Zwangsführung bieten, die zumindest einen Kupplungspartner mit dem Einstecken im Sinne der drehformschlüssigen Eingriffs-Drehstellung der Kupplungspartner relativ zueinander ausrichtet.

Vorliegend sind die Kupplungspartner vorzugsweise konusförmig und Umfang bzw. Einhüllende kreisförmig. Die Einhüllenden des Außenumfangs des Einführ-Endes des positiven Kupplungspartners und/oder die Einhüllenden des Innenumfangs der Aufnahmeöffnung des negativen Kupplungspartners stellen die wesentlichen ersten Kontaktbereiche beim Aufeinanderstecken der Kupplungspartner dar. An den Einführenden der Kupplungspartner sind konkave Einführaussparungen angeordnet, die eine Zwangsführung beim Einstecken liefern. Durch eine mit den Wandungs-Drehformschlusselementen korrespondierende, abgeschrägte Ausführung der Einführaussparungen, die in Grenzbereichen zwischen zwei Wandungs-Drehformschlusselementen lediglich in schmalen Geometrien, vorzugsweise in linienförmigen Stegen oder nahezu punktförmigen Spitzen enden, wird ein gegenseitiges Abgleiten in Axialrichtung erreicht über eine Rotation in Umfangsrichtung erzwungen. Die axiale Zwangsführung ist somit verbunden mit einer Rotation der Kupplungspartner gegeneinander in eine nächstliegende Eingriffs-Drehstellung, Die Drehung erfolgt dabei zwangsgeführt vorzugsweise durch sich abflachende Flanken einer Einführaussparung lediglich über einen kleinen positiven oder negativen Drehwinkel bezogen auf den Auftreffpunkt der beiden Kupplungspartner in eine in positiver oder negativer Drehrichtung liegende, benachbarte Eingriffs-Drehstellung. Es wird somit auf sehr kurzem Weg auf zuverlässige Weise ein formschlüssiger Eingriff zweier Kupplungselemente ohne notwendigen Sichtkontakt beim Einsetzen hergestellt.

Vorteilhaft ist es, wenn die Einführaussparungen mit Komponente in Axialrichtung verlaufen und an der jeweiligen Stirnfläche des betreffenden Kupplungspartners enden. Sobald ein Kupplungspartner in dem Bereich der Einführaussparungen auf die Stirnfläche auftrifft, wird er durch die ausgreifende Form der Einführaussparung eingefangen und zugleich in die der Einführrichtung entsprechenden Axialrichtung geleitet.

Eine umfassende Einführhilfe ist gegeben, wenn die Einführaussparungen segmentweise und insbesondere direkt aneinandergrenzend ausgebildet sind. Durch die nahezu kontinuierliche Ausbildung der Einführaussparung wird eine allseitige Einführhilfe gewährleistet, die ein Stocken oder Hakeln um Einführprozess verhindert und auch bei größeren Auftreffabweichungen eine gute Führung ermöglicht.

Eine sehr schnelle und zuverlässig reproduzierbare Einführhilfe ist gegeben, wenn die Bereiche, in denen die Einführaussparungen aneinandergrenzen, als Spitze ausgebildet sind. In der Regel werden die Spitzen der Einführaussparungen des einen Kupplungspartners auf Abschrägungen beim anderen Kupplungspartner treffen und somit leicht ineinander gleiten. Falls zufällig einmal bei einem Einführvorgang Spitzen auf Spitzen treffen, ist ebenfalls kein längerer Halt möglicht, sondern die Spitzen werden aneinander abgleiten und in die Abschrägungen zu den Wandungs-Drehformschlusselementen geführt. Somit ist in jedem Fall eine sichere und automatische Einführung der Kupplungspartner gegeben.

Die Einführung wird beschleunigt und somit wiederum erleichtert, wenn die Einführaussparungen konkav ausgebildete Fasensegmente sind. Die konkave Form führt zudem zu einer weiter ausgeprägten Spitze, die ein Stocken beim Ineinanderschieben verhindert.

Eine den Wandungs-Drehformschlusselementen angepasste Ausführung ist gegeben, wenn die Anzahl der Einführaussparungen der Anzahl von einzelnen Wandungs-Drehformschlusselementen entspricht. Somit sind die Wandungs-Drehformschlusselemente und die Einführaussparungen direkt korrespondierend ausgebildet und einander zugeordnet, so dass entsprechende Wandungs-Drehformschlusselemente des anderen Kupplungspartners auf kürzestem Wege in die Wandungs-Drehformschlusselemente des ersten Kupplungspartners geleitet werden.

Die Einführaussparungen sind in ihrer Wirkung als Einführhilfe stark ausgeprägt, wenn die Einführaussparungen gegenüber den Wandungs-Drehformschlusselementen im wesentlichen gleichmäßig um 360°/(Anzahl der Einführaussparungen) * 0,5 versetzt angeordnet sind. Die Versetzung bedeutet also eine maximale Wirkung der Einführung durch die Spitze der Einführaussparungen an dem Bereich des größten Durchmessers des Querschnitts der Wandungs-Drehformschlusselemente. Hierdurch wird die Gefahr des Verhakens gerade in diesen am weitesten ausladenden Bereichen des Querschnitts der Wandungs-Drehformschlusselemente insbesondere im positiven Kupplungspartner vermieden.

Vorteilhaft ist es, wenn die Wandungs-Drehformschlusselemente im wesentlichen axial verlaufende konkave und/oder konvexe Längssegmente sind. Hierdurch ist ein guterDrehformschluss mit.einer großen Kontaktfläche gegeben, der zudem eine sichere, durchgehende Auflage der korrespondierenden Wandungs-Drehformschlusselemente liefert.

Die Fertigung ist erleichtert, wenn die Wandungs-Drehformschlusselemente des positiven Kupplungspartners konvexe Längselemente und Wandungs-Drehformschlusselemente des negativen Kupplungspartners korrespondierende konkave Längssegmente sind. Zudem ist die Stabilität der Kupplungspartner verbessert.

Eine sichere Führung und Passung in allen Einführstadien ist gegeben, wenn zwischen zwei Wandungs-Drehformschiusselementen Zwickel bei positiven und Längsstege bzw. Längsnasen bei dem negativen Kupplungspartner vorhanden sind.

Ein Stocken beim Einführprozess wird auf ein Minimum reduziert, wenn die Wandungs-Drehformschlusselemente einen dreieckförmigen Querschnitt mit nach außen weisender Spitze aufweisen

Eine über den gesamten Umfang gleichmäßige und sichere Führung der Kupplungspartner ist gegeben, wenn die Wandungs-Drehformschlusselemente einen ausgerundeten Querschnitt aufweisen.

Ein sicherer Sitz und eine kontinuierliche Drehkupplung auch bereits während des Einsteckvorgangs ist gegeben, wenn die Wandungs-Drehformschlusselemente sich entgegen der Einführrichtung axial verbreiternd ausgebildet sind.

Eine ausreichende Führung beim Einsetzen und zugleich eine Kupplung mit großer Kraftübertragung und Passgenauigkeit im eingekuppelten Zustand ist gegeben, wenn die effektive Höhe der Einführaussparungen bezogen auf die Eingriffslänge der Kupplungspartner etwa 5% bis etwa 20%, insbesondere etwa 10% beträgt.

Vorteilhaft ist es, wenn die Anzahl der Wandungs-Drehformschlusselemente größer/gleich acht, insbesondere elf und insbesondere kleiner/gleich dreißig ist. Ein oder mehrere Wandungs-Drehformschlusselement können mit einem größeren Querschnitt ausgebildet sein, als die übrigen, mit einer entsprechenden Ausführung am anderen Kupplungspartner.

Eine gute Dämpfung wird erreicht, das positive und/oder auch das negative Kupplungsteil ein Kunststoff-Spritzgießteil aufweist, das die Wandungs-Drehformschlusselemente aufweist. Durch die Auswahl der elastische Parameter des Kupplungselements kann somit der Dämpfungsgrad mit beeinflusst werden. Zudem ist ein derartiges Kunststoffelement auch bei komplexeren Querschnitten der Wandungs-Drehformschlusselemente kostengünstig herzustellen

Vorteilhaft ist es zudem, wenn das Kunststoff-Spritzgießteil das positive Kupplungselement gegenüber dem negativen Kupplungselement elektrisch isoliert.

Weitere Merkmale und Vorteile der Erfindung ergeben sich aus den Ansprüchen und der nachstehenden Beschreibung, in der Ausführungsbeispiele des Gegenstands der Erfindung in Verbindung mit den Zeichnungen näher erläutert sind. Es zeigen:
- Fig. 1: eine schematische perspektivische Ansicht zweier Kupplungspartner und
- Fig.2: eine Schnittansicht zweier Kupplungspartner im Zusammenbau.

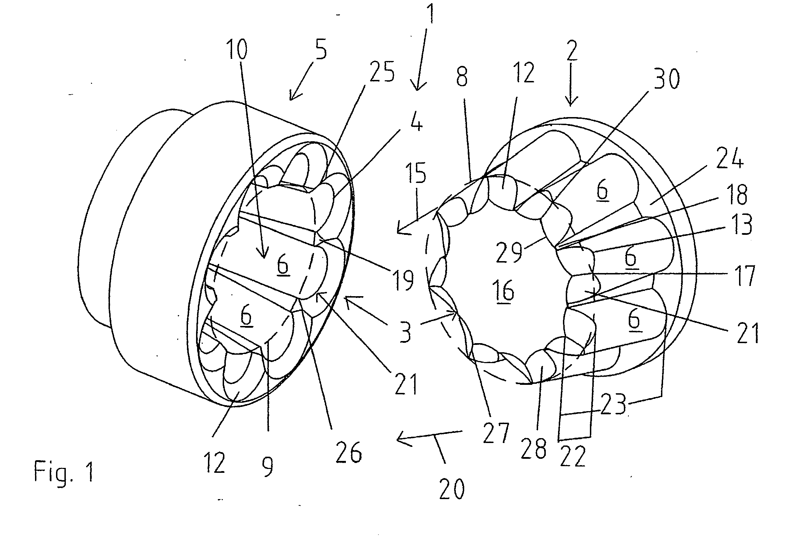

Fig.1 zeigt eine schematische perspektivische Ansicht zweier Kupplungspartner 2, 5. Der positive Kupplungspartner 2 ist konusförmig auf eine Stirnfläche 16 hin zulaufend ausgebildet. An der Umfangsfläche befinden sich Wandungs-Drehformschlusselemente 6, im vorliegenden Fall in Form von von einem Einführende 3 bis zu einem Einführbegrenzungsrand 24 verlaufenden, nahezu halbzylinderförmigen, konvexen Längssegmenten. Der Querschnitt ist vorteilhaft im wesentlichen halbrund, weil auf diese Weise ein großflächiger Drehformschluss gegenüber dem negativen Kupplungspartner 5 ermöglicht wird. Es kann jedoch beispielsweise auch ein dreieckförmiger Querschnitt vorgesehen sein, der einfach zu fertigen ist. Die an dem negativen Kupplungspartner 5 eingebrachten Wandungs-Drehformschlusselemente 6 sind in gegenüber den Wandungs-Drehformschlusselementen 6 des positiven Kupplungspartners 2 negativer Form ausgebildet, wobei sich Elemente 6 mit konkaven und konvexen Querschnitt 21 sowohl im negativen als auch im positiven Kupplungspartner befinden können, sowie ein Wechsel von konkaven und konvexen Elementen innerhalb eines Kupplungspartners erfolgen kann.

Um das Einführen der Kupplungspartner 2, 5 ineinander zu erleichtern, befinden sich am Einführende 3 zumindest eines der Kupplungspartner 2, 5, vorzugsweise an beiden Kupplungspartnern, Einführaussparungen 12. Im Ausführungsbeispiel sind die Einführaussparungen 12 am negativen Kupplungspartner 5 an einer Aufnahmeöffnung 10 in Form von entlang einer Einhüllenden 9 eines Innenumfangs 4 verlaufenden, der halbrunden Querschnittsform der Wandungs-Drehformschlusselemente 6 folgenden, halbzylinderförmige, konusartig zulaufende Abschrägungen ausgebildet. Die Einführaussparungen 12 nebeneinander angeordneter Wandungs-Drehformschlusselemente 6 sind in den aneinander angrenzenden Überlappungsbereichen 25 als nahezu linienförmig begrenzte Längsstege 19 ausgebildet. Diese Längsstege 19 weisen vorzugsweise eine Verlaufskomponente in Axialrichtung 15 der beiden Kupplungspartner auf. Die Abschrägungen besitzen ebenfalls eine Verlaufskomponente in Einführrichtung, die unterschiedlich stark ausgebildet sein kann, je nach Ausprägung als Einführhilfe. Die Längsstege 19 sind an der Einhüllenden des Innenumfangs durch eine Flanke begrenzt, die wiederum eine Komponente in Einführrichtung 15 aufweist. Somit endet der Längssteg 19 in der Nähe der Einhüllenden 9 in Form einer nahezu punktförmigen Spitze 26.

Der positive Kupplungspartner 2 weist an dem Einführende 3 Einführaussparungen 12 auf, die konkave Abschnitte aus den oberen Enden der Wandungs-Drehformschlusselemente 6 herausschneiden. Ein Wandungs-Drehformschlusselement 6 ist vorzugsweise durch zwei sich nahezu mittig in einem Längssteg 27 überlappende, konkav gekrümmte, flankenartige Abschrägungen 28 als Teil der Einführaussparungen 12 begrenzt, die eine Verlaufskomponente in Einführrichtung 15 besitzen. Die Einführaussparungen 12 sind praktisch entlang der gesamten Einhüllenden 8 eines Außenumfangs 13 des Einführ-Endes 3 des positiven Kupplungspartners 2 angeordnet. Die Abschrägungen 28 zweier Wandungs-Drehformschlusselemente 6 grenzen im Beispiel in Form eines Zwickels 18 derart aneinander, dass die Krümmungen der Abschrägungen 28 einander fortsetzen oder zumindest keine ausgeprägte Auswölbung bilden. An der Stirnfläche 16 des positiven Kupplungspartners 2 laufen die Abschrägungen 28 und die Längsstege 27 in Form einer nahezu punktförmigen Spitze 30 zusammen, wobei die Schnittlinien 29 der Abschrägungen 28 und der Stirnfläche 16 vorzugsweise ebenfalls konkav ausgebildet sind, jedoch auch nahezu gerade verlaufen können. Die Spitze 30 befindet sich dabei in einem Mittenbereich des Querschnitts des Wandungs-Drehformschlusselements 6.

Durch die Anordnung der Spitze 30 und/oder Längsstege 27 zwischen zwei Abschrägungen 28 in Form von Flankenbereichen der Einführaussparungen 12 wird ein gegenseitiges Abgleiten der Kupplungspartner in Axialrichtung über eine Rotation in Umfangsrichtung erzwungen. Die axiale Zwangsführung ist somit verbunden mit einer Rotation der Kupplungspartner gegeneinander in eine nächstliegende Eingriffs-Drehstellung. Die Drehung erfolgt dabei zwangsgeführt über die sich abflachende Flanken, Abschrägungen 28 einer Einführaussparung 12 lediglich über einen kleinen positiven oder negativen Drehwinkel bezogen auf den Auftreffpunkt der beiden Kupplungspartner in eine in positiver oder negativer Drehrichtung liegende, benachbarte Eingriffs-Drehstellung 7. Die Flankenbereiche weisen in der Nähe der Spitze 30 zunächst einen steileren Winkel auf, der mit zunehmender Entfernung von der Spitze abnimmt und schließlich mit einem benachbarten Flankenbereiche in einer Art Wellental zusammenläuft. Hierdurch wird die Drehung der Kupplungspartner beim Einführen zunächst beschleunigt und dann wieder bis zum Erreichen des Tales, vorzugsweise im Bereich eines Zwickels 18 zwischen zwei Wandungs-Drehformschlusselementen 6, abgebremst. An dieser Stelle liegen die Wandungs-Drehformschlusselemente 6 der beiden Kupplungspartner nun exakt passend aneinander und müssen nun lediglich in Form einer axialen Führung axial ineinander geschoben werden. Durch die Drehung wird somit erreicht, dass entsprechend geformte Wandungs-Drehformschlusselemente 6 zweier Kupplungspartner einenander derart ausgerichtet gegenüberliegen, dass hierdurch eine einfache und ungehinderte axiale Einführung in den anderen Kupplungspartner möglicht wird.

Im Ausführungsbeispiel sind jeweils acht gleichverteilte Wandungs-Drehformschlusselemente 6 in beiden Kupplungspartnern dargestellt, mit denen die Einführaussparungen 12 hinsichtlich ihrer Anzahl, Anordnung und Geometrie jeweils korrespondieren. Es können jedoch entsprechend dem Radius der Kupplungspartner mehr oder weniger Wandungs-Drehformschlusselemente 6 und entsprechend Einführaussparungen 12 sein.

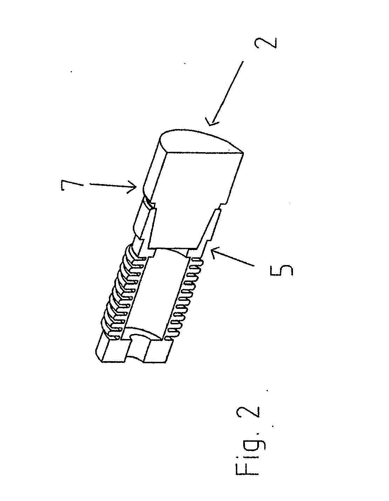

Fig.2 zeigt eine Schnittansicht zweier Kupplungspartner 2, 5 im eingesetzten Zustand. Das Aus- und Einrücken der Kupplung erfolgt durch das Ineinander - oder Auseinanderschieben der Kupplungspartner 2, 5, wobei eine Einstellen einer Vorspannung erfolgt, um den sicheren Sitz zu gewährleisten. Entsprechend angeordnete und ausgebildete Wandungs-Drehformschlusselemente 6 ermöglichen eine exakte Passung mit einer hohen Passungsgenauigkeit. Die beiden Kupplungspartner 2, 5 können mit Hilfe der Einführaussparungen 12 auch ohne direkte Sicht leicht und zuverlässig ineinander geschoben werden, wobei Spitzenbereiche der Einführaussparungen 12 bei einem Aufeinandertreffen zu einer zwangsweise leitenden Drehung des jeweiligen Kupplungspartners gegenüber dem anderen Kupplungspartner führen und somit eine automatische, unausweichliche Führung des Ineinandergleitens der Wandungs-Drehformschlusselemente 6 der jeweiligen Kupplungspartner einleiten und die Kupplungspartner relativ zueinander ausreichtet, so dass das weitere Einschieben der Wandungs-Drehformschlusselemente 6 ohne Hindernis und Widerstand erfolgt.

Die Kupplungspartner 2,5 sind auch nach Einbau ohne Sichtkontakt sicher in eine relative Eingriffs-Drehstellung 7 zusammengeführt, wobei eine Drehmomentenkupplung der Kupplungspartner sowie der daran angeschlossenen Naben erreicht wird. Die Kupplung ermöglicht eine spielfreie Übertragung einer Drehbewegung, eine Dämpfung von Kraftstößen, sowie einen Ausgleich eines Winkelversatzes oder achsparallelen Versatzes beider Kupplungselemente.

### BEZUGSZEICHENLISTE

- 1: Steckkupplung
- 2: positiver Kupplungspartner
- 3: Einführende
- 4: Innenumfang
- 5: negativer Kupplungspartner
- 6: Wandungs-Drehformschlusselement
- 7: Eingriffs-Drehstellung
- 8: Einhüllende des Außenumfangs
- 9: Einhüllende des Innenumfangs
- 10: Aufnahmeöffnung
- 12: Einführaussparung
- 13: Außenumfang
- 15: Axialrichtung
- 16: Stirnfläche
- 17: Bereich
- 18: Zwickel
- 19: Längssteg
- 20: Einführungsrichtung
- 21: Querschnitt
- 22: Höhe
- 23: Eingriffslänge
- 24: Einführbegrenzungsrand
- 25: Überlappungsbereich
- 26: Spitze
- 27: Längssteg
- 28: Abschrägung
- 29: Schnittlinie
- 30: Spitze

## Patentansprüche

1. Steckkupplung (1) mit einem positiven Kupplungspartner (2), der mit einem Einführ-Ende (3) voran in eine Aufnahmeöffnung (10) eines negativen Kupplungspartners (5) einzuführen ist, wobei die Kupplungspartner korrespondierende Wandungs-Drehformschlusselemente (6) aufweisen, so dass im eingeführten Zustand die Wandungs-Drehformschlusselemente (6) der Kupplungspartner in einer drehformschlüssigen, relativen Eingriffs-Drehstellung (7) stehen und eine gegenseitige Drehmomentenkupplung der Kupplungspartner bewirken, wobei praktisch entlang der gesamten Einhüllenden (8) des Außenumfangs (13) des Einführ-Endes (3) des positiven Kupplungspartners (2) und/oder der Einhüllenden (9) des Innenumfangs (4) der Aufnahmeöffnung (10) des negativen Kupplungspartners (5) verteilte, im wesentlichen konkave Einführaussparungen (12) vorgesehen sind, welche mit den Wandungs-Drehformschlusselementen (6) beider Kupplungspartner und/oder mit den Einführaussparungen (12) des jeweils anderen Kupplungspartners hinsichtlich ihrer Anzahl, Anordnung und Geometrie derart korrespondieren, dass sie eine Zwangsführung bieten, die zumindest einen Kupplungspartner mit dem Einstecken im Sinne der drehformschlüssigen Eingriffs-Drehstellung der Kupplungspartner relativ zueinander ausrichtet, *wobei die Wandungs-Drehformschlusselemente (6) im wesentlichen axial verlaufende* konkave *und*/*oder konvexe Längssegmente sind und die Berei - che (17), in denen die Einführaussparungen (12) aneinandergrenzen, als Spitze ausgebildete sind*, and **dadurch gekennzeichnet, dass** *die Wandungs-Drehformshhlusselemente (6) einen ausgerundeten Querschnitt (21) aufweisen*.

2. Steckkupplung nach Anspruch 1, **dadurch gekennzeichnet, dass** die Einführaussparungen (12) mit Komponente in Axialrichtung (15) verlaufen und an der jeweiligen Stirnfläche (16) des betreffenden Kupplungspartners (2, 3) enden.

3. Steckkupplung nach einem der Ansprüche 1 oder 2, **dadurch gekennzeichnet, dass** die Einführaussparungen (12) mit Neigung gegenüber der Axialrichtung (15) verlaufen.

4. Steckkupplung nach einem der Ansprüche 1 bis 3, **dadurch gekennzeichnet, dass** die Einführaussparungen (12) segmentweise und insbesondere direkt aneinandergrenzend ausgebildet sind.

5. Steckkupplung nach einem der Ansprüche 1 bis 4, **dadurch gekennzeichnet, dass** die Einführaussparungen (12) konkav ausgebildete Fasensegmente sind.

6. Steckkupplung nach einem der Ansprüche 1 bis 5, **dadurch gekennzeichnet, dass** die Anzahl der Einführaussparungen (12) der Anzahl von einzelnen Wandungs-Drehformschlusselementen (6) entspricht.

7. Steckkupplung nach Anspruch 6, **dadurch gekennzeichnet, dass** die Einführaussparungen (12) gegenüber den Wandungs-Drehformschlusselementen (6) im wesentlichen gleichmäßig um 360°/(Anzahl der Einführaussparungen (12) ) * 0,5 versetzt angeordnet sind.

8. Steckkupplung nach einem der Ansprüche 1 bis 7, **dadurch gekennzeichnet, dass** die Wandungs-Drehformschlusselemente (6) des positiven Kupplungspartners (2) konvexe Längselemente und Wandungs-Drehformschlusselemente (6) des negativen Kupplungspartners (5) korrespondierende konkave Längssegmente sind.

9. Steckkupplung nach einem der Ansprüche 1 bis 8, **dadurch gekennzeichnet, dass** zwischen zwei Wandungs-Drehformschlusselementen (6) Zwickel (18) bei positiven (2) und Längsstege bzw. Längsnasen (19) bei dem negativen Kupplungspartner (5) vorhanden sind.

10. Steckkupplung nach einem der Ansprüche 1 bis 9, **dadurch gekennzeichnet, dass** die Wandungs-Drehformschlusselemente (6) einen dreieckförmigen Querschnitt (21) mit nach außen weisender Spitze aufweisen

11. Steckkupplung nach einem der Ansprüche 1 bis 10, **dadurch gekennzeichnet, dass** die Wandungs-Drehformschlusselemente (6) sich entgegen der Einführrichtung (20) axial verbreiternd ausgebildet sind.

12. Steckkupplung nach einem der Ansprüche 1 bis 11, **dadurch gekennzeichnet, dass** die effektive Höhe (22) der Einführaussparungen (12) bezogen auf die Eingriffslänge (23) der Kupplungspartner etwa 5% bis etwa 20%, insbesondere etwa 10% beträgt.

13. Steckkupplung nach einem der Ansprüche 1 bis 12, **dadurch gekennzeichnet, dass** die Anzahl der Wandungs-Drehformschlusselemente (6) größer/gleich acht, insbesondere elf und insbesondere kleiner/gleich dreißig ist.

14. Steckkupplung nach einem der Ansprüche 1 bis 13, **dadurch gekennzeichnet, dass** der positive Kupplungspartner (2) und/oder der negative Kupplungspartner (5) ein Kunststoff-Spritzgießteil aufweist, das die Wandungs-Drehformschlusselemente (6) aufweist.

15. Steckkupplung nach einem der Ansprüche 1 bis 14, **dadurch gekennzeichnet, dass** das Kunststoff-Spritzgießteil den positiven Kupplungspartner gegenüber dem negativen Kupplungspartner elektrisch isoliert.

## Claims

1. A plug-in coupling (1) with a positive coupling partner (2) to be introduced into a receiving hole (10) of a negative coupling partner (5) with a pilot (3) ahead, with the coupling partners having corresponding positive locking wall rotating elements (6), so that in the introduced condition the positive locking wall rotating elements (6) of the coupling partners are in a rotational relative engagement position with positive locking (7) effecting a mutual torque coupling of the coupling partners with substantially concave introduction recesses (12) being provided virtually spaced alongside the entire envelope (8) of the external perimeter (13) of the pilot (3) of the positive coupling partner (2) and / or the envelope (9) of the internal perimeter (4) of the receiving hole (10) of the negative coupling partner (5), corresponding with the positive locking wall rotating elements (6) of both coupling partners and / or with the introduction recesses (12) of the other coupling partner in each case with respect to their number, arrangement and geometry such that they offer a forced guidance aligning relatively to each other at least one coupling partner by introduction or plug-in within the sense of the rotational engagement position with positive locking of the coupling partners, with the positive locking wall rotating elements (6) being substantially axially extending concave and /or convex longitudinal segments and the regions (17) with adjacent introduction recesses (12) being defined as a tip, and **characterized in that** the positive locking wall rotating elements (6) have a round cross section (21).

2. A plug-in coupling according to claim 1, **characterized in that** the introduction recesses (12) extend with component in axial direction (15) and terminate in the respective end face (16) of the corresponding coupling partner (2, 3).

3. A plug-in coupling (1) according to any one claim 1 or 2, **characterized in that** the introduction recesses (12) have an inclination relative to the axial direction (15).

4. A plug-in coupling (1) according to any one of the claims 1 to 3, **characterized in that** the introduction recesses (12) are formed in segments and particularly adjacent to each other.

5. A plug-in coupling (1) according to any one of the claims 1 to 4, **characterized in that** the introduction recesses (12) are concavely formed bevel segments.

6. A plug-in coupling (1) according to any one of the claims 1 to 5, **characterized in that** the number of the introduction recesses (12) corresponds to the number of individual positive locking wall rotating elements (6).

7. A plug-in coupling (1) according to claim 6, **characterized in that** the introduction recesses (12) opposite to the positive locking wall rotating elements (6) are disposed substantially uniform and offset by 360 ° / (number of introduction recesses (12) ) * 0.5.

8. A plug-in coupling (1) according to any one of the claims 1 to 7, **characterized in that** the positive locking wall rotating elements (6) of the positive coupling partner (2) are convex longitudinal elements and the positive locking wall rotating elements (6) of the negative coupling partner (5) are corresponding concave longitudinal segments.

9. A plug-in coupling (1) according to any one of the claims 1 to 8, **characterized in that** between two positive locking wall rotating elements (6) gussets (18) exist at the positive coupling partner (2) and longitudinal webs and / or longitudinal lobes (19) exist at the negative coupling partner (5).

10. A plug-in coupling (1) according to any one of the claims 1 to 9, **characterized in that** the positive locking wall rotating elements (6) have a triangular cross section (21) with a tip pointing towards the outside.

11. A plug-in coupling (1) according to any one of the claims 1 to 10, **characterized in that** the positive locking wall rotating elements (6) are formed in an axially broadening way contrary to the direction of introduction (20).

12. A plug-in coupling (1) according to any one of the claims 1 to 11, **characterized in that** the effective height (22) of the introduction recesses (12) referred to the engagement length (23) of the coupling partners is approx. 5 % to approx. 20 %, especially approx. 10 %.

13. A plug-in coupling (1) according to any one of the claims 1 to 12, **characterized in that** the number of the positive locking wall rotating elements (6) is greater than / equal to eight, especially eleven and especially smaller / equal to thirty.

14. A plug-in coupling (1) according to any one of the claims 1 to 13, **characterized in that** the positive coupling partner (2) and / or the negative coupling partner (5) comprises an injection molded plastic part comprising the positive locking wall rotating elements (6).

15. A plug-in coupling (1) according to any one of the claims 1 to 14, **characterized in that** the injection molded plastic part electrically isolates the positive coupling partner from the negative coupling partner.

## Revendications

1. Accouplement embrochable (1) avec un partenaire d'accouplement positif (2) à introduire avec une extrémité d'introduction (3) en avant dans une ouverture réceptrice (10) d'un partenaire d'accouplement négatif (5), les partenaires d'accouplement comportant des éléments rotatifs de paroi à engagement positif correspondants (6) de sorte qu' en état introduit les éléments rotatifs de paroi à engagement positif (6) des partenaires d'accouplement se trouvent dans une position relative craboté de rotation d'engagement (7) effectuant un accouplement de couple mutuel des partenaires d'accouplement, des encoches d'introduction sensiblement concaves (12) étant prévus pratiquement espacés le long de l'enveloppante (8) entière de la périphérie extérieure (13) de l'extrémité d'introduction (3) du partenaire d'accouplement positif (2) et/ou de l'enveloppante (9) de la périphérie intérieure (4) de l'ouverture réceptrice (10) du partenaire d'accouplement négatif, correspondant avec les éléments rotatifs de paroi à engagement positif (6) des deux partenaires d'accouplement et/ou avec les encoches d'introduction (12) de l'autre partenaire d'accouplement dans chaque cas concernant nombre, agencement et géométrie de sorte qu'ils offrent un guidage forcé alignant au moins un partenaire d'accouplement avec l'emboîtement dans le sens de la position crabotée de rotation d'engagement des partenaires d'accouplement l'un vers l'autre de manière relative, les éléments rotatifs de paroi à engagement positif (6) étant des segments longitudinaux concaves et / ou convexes s'étendant sensiblement d'une manière axiale et les zones (17) avec des encoches d'introduction (12) adjacentes étant conformés comme une pointe, et **caractérisé en ce que** les éléments rotatifs de paroi à engagement positif (6) comportent une section (21) arrondie.

2. Accouplement embrochable selon la revendication 1, **caractérisé en ce que** les encoches d'introduction (12) avec composant s'étendent en direction axiale (15) en terminant à la face frontale respective (16) du partenaire d'accouplement correspondant (2, 3).

3. Accouplement embrochable selon la revendication 1 ou 2, **caractérisé en ce que** les encoches d'introduction (12) s'étendent avec inclinaison par rapport à la direction axiale (15).

4. Accouplement embrochable selon l'une des revendications 1 à 3, **caractérisé en ce que** les encoches d'introduction (12) sont conformées en segments et notamment adjacentes l'une à l'autre.

5. Accouplement embrochable selon l'une des revendications 1 à 4, **caractérisé en ce que** les encoches d'introduction (12) sont des segments de biseau conformés de manière concave.

6. Accouplement embrochable selon l'une des revendications 1 à 5, **caractérisé en ce que** le nombre des encoches d'introduction (12) correspond au nombre des éléments rotatifs individuels de paroi à engagement positif (6).

7. Accouplement embrochable selon la revendication 6, **caractérisé en ce que** les encoches d'introduction (12) sont disposées par rapports aux éléments rotatifs de paroi à engagement positif (6) sensiblement uniformes et décalés par 360 °/ (nombre des encoches d'introduction (12) ) * 0,5.

8. Accouplement embrochable selon l'une des revendications 1 à 7, **caractérisé en ce que** les éléments rotatifs de paroi à engagement positif (6) du partenaire d'accouplement positif (2) sont des éléments longitudinaux convexes (2) et des éléments rotatifs de paroi à engagement positif (6) du partenaire d'accouplement négatif (5) sont des éléments longitudinaux concaves correspondants.

9. Accouplement embrochable selon l'une des revendications 1 à 8, **caractérisé en ce que** des goussets (18) existent entre deux éléments rotatifs de paroi à engagement positif (6) auprès du partenaire d'accouplement positif (2) et des âmes longitudinales et/ou des nez longitudinaux (19) existent auprès le partenaire d'accouplement négatif (5).

10. Accouplement embrochable selon l'une des revendications 1 à 9, **caractérisé en ce que** les éléments rotatifs de paroi à engagement positif (6) possèdent une section triangulaire (21) avec une pointe montrant à l'extérieur.

11. Accouplement embrochable selon l'une des revendications 1 à 10, **caractérisé en ce que** les éléments rotatifs de paroi à engagement positif (6) sont conformés s'évasant axialement en sens inverse de la direction d'introduction (20).

12. Accouplement embrochable selon l'une des revendications 1 à 11, **caractérisé en ce que** la hauteur effective (22) des encoches d'introduction (12) relative à la longueur d'engagement (23) des partenaires d'accouplement est de 5 % à 20 % environ et notamment 10 % environ.

13. Accouplement embrochable selon l'une des revendications 1 à 12, **caractérisé en ce que** le nombre des éléments rotatifs de paroi à engagement positif (6) est supérieur / égal à huit, notamment onze et notamment inférieur / égal à trente.

14. Accouplement embrochable selon l'une des revendications 1 à 13, **caractérisé en ce que** le partenaire d'accouplement positif (2) et / ou le partenaire d'accouplement négatif (5) présente une pièce injectée en matière plastique présentant les éléments rotatifs de paroi à engagement positif (6).

15. Accouplement embrochable selon l'une des revendications 1 à 14, **caractérisé en ce que** la pièce injectée en matière plastique isole électriquement le partenaire d'accouplement positif contre le partenaire d'accouplement négatif.
